# EUROPÄISCHE PATENTSCHRIFT

(11) **EP 3 775 765 B1**
(45) Veröffentlichungstag und Bekanntmachung des Hinweises auf die Patenterteilung: **04.09.2024**
(21) Anmeldenummer: 19739954.6
(22) Anmeldetag: 05.07.2019
(51) Int. Cl.: G01B 11/24, F01D 5/00, G01B 11/25, G01B 11/245, B23P 6/00, F01D 5/18, F01D 5/28, F01D 9/02, F01D 9/06, F02K 1/82, F23R 3/06

(54) **VORRICHTUNG UND VERFAHREN ZUR OBERFLÄCHENANALYSE VON BAUTEILEN MIT KÜHLFLUIDÖFFNUNGEN**
DEVICE AND METHOD FOR ANALYZING THE SURFACE OF PARTS HAVING COOLING FLUID OPENINGS
DISPOSITIF ET PROCÉDÉ POUR ANALYSER LA SURFACE DE COMPOSANTS PRÉSENTANT DES OUVERTURES POUR FLUIDE DE REFROIDISSEMENT

(30) Priorität: 09.07.2018 DE 102018211288
(43) Veröffentlichungstag der Anmeldung: 17.02.2021
(73) Patentinhaber: Siemens Energy Global GmbH & Co. KG, 81739 München (DE)
(72) Erfinder: BECK, Thomas, 16341 Panketal (DE); DIETRICH, Jens, 14612 Falkensee (DE); KATZURKE, Oliver, 12205 Berlin (DE); KRÜGERKE, Marcel, 16348 Wandlitz (DE); MASSA, Andrea, 12157 Berlin (DE); ZIMMERMANN, Richard, 10318 Berlin (DE); KREUZIGER, Sven, 52062 Aachen (DE)
(86) Internationale Anmeldenummer: PCT/EP2019/068127
(87) Internationale Veröffentlichungsnummer: WO 2020/011673

(56) Entgegenhaltungen:
- EP-A1- 1 510 283
- US-A1- 2002 076 097
- US-A1- 2015 160 644

## Beschreibung

Die vorliegende Erfindung betrifft ein Verfahren zur Oberflächenanalyse der vorgenannten Bauteile. Ferner betrifft die vorliegende Erfindung eine Vorrichtung zur Oberflächenanalyse von Bauteilen, welche an ihrer Oberfläche Kühlfluidöffnung aufweisen, wobei vorgenannte Kühlfluidöffnungen nach einem nachfolgenden Beschichtungsschritt wieder definiert geöffnet werden müssen. Ferner betrifft die vorliegende Erfindung die Verwendung der vorgenannten Vorrichtung bei der Herstellung oder Instandsetzung von Bauteilen einer Strömungsmaschine. Ferner betrifft die Erfindung die Verwendung der mittels der erfindungsgemäßen Vorrichtung und/oder der mittels des erfindungsgemäßen Verfahrens erhaltenen Informationen bei der Erzeugung eines Modells des Bauteils oder der Korrektur eines bestehenden Modells des Bauteils.

Mechanisch stark belastete Bauteile, die einem heißen und korrosiven Medium ausgesetzt sind, wie zum Beispiel Turbinenschaufeln oder andere Turbinenbauteile, sind häufig aus hochwarmfesten Superlegierungen hergestellt und zudem mit aufwendigen korrosions- und/oder oxidationshemmenden Beschichtungen und/oder wärmedämmenden Beschichtungen versehen. Außerdem sind solche Bauteile typischerweise mit internen Kühlfluidkanälen ausgestattet, mit deren Hilfe Kühlfluid wie beispielsweise ein Gas wie Luft durch das Bauteil geleitet werden kann, um aufgenommene Wärme rasch abzuführen. Wenn zudem ein Kühlfluidfilm über der Oberfläche des Bauteils geschaffen werden soll, damit die Oberfläche nicht unmittelbar dem hei-ßen und korrosiven Medium ausgesetzt ist, weisen die Bauteile Kühlfluidöffnungen auf, durch das Kühlfluid aus dem Inneren des Bauteils ausgeblasen wird.

Beispielsweise befasst sich die EP 1510283 A1 mit einer automatisierte adaptive Bearbeitung von verstopften Passagen. Ferner befasst sich die US 2015/0160644 A1 mit einer Reparaturmethode, einem System für automatische Platzierung und Reinigung, sowie einem Werkzeug zur automatischen Detektion und Veränderung.

Beim Aufbringen einer Beschichtung auf ein mit Kühlfluidöffnungen versehenes Bauteil werden die Kühlfluidöffnungen durch das Beschichtungsmaterial zumindest teilweise verschlossen. Sie müssen daher nach Abschluss des Beschichtungsprozesses wieder geöffnet werden. Dies kann beispielsweise dadurch geschehen, dass bestimmte Kühlfluidöffnungen als Referenzöffnungen ausgewählt werden und dann vor dem Beschichtungsprozess mittels eines Maskierungsmaterials, auf dem das Beschichtungsmaterial schlecht haftet, verschlossen werden. Nach dem Beschichten wird das Maskierungsmaterial in den Referenzöffnungen dann entweder manuell entfernt oder ausgebrannt, falls ein Ausbrennen des Maskierungsmittel Verwendung findet. Anschließend wird anhand der Lage der Referenzöffnungen die Position der verbleibenden Kühlfluidöffnungen bestimmt. Die weiteren Kühlfluidöffnungen werden beispielsweise mittels eines Laserprogramms wieder geöffnet. Ein Problem hierbei ist jedoch, dass auch bei Vorliegen der Konstruktionsdaten des Bauteils Abweichungen hinsichtlich der Lage und Orientierung der weiteren Kühlfluidkanäle und Kühlfluidöffnungen vorhanden sein können. Dies ist zurückzuführen auf beispielsweise unterschiedliche Toleranzen verschiedener Hersteller. Ferner kann es bei den Bauteilen während des Betriebs zu einer Veränderung der Geometrie des Bauteils kommen. Bei der Instandsetzung bereits genutzter Bauteile kann somit nicht gänzlich auf die Konstruktionsdaten vertraut werden. Zudem sollte auch niemals gänzlich ein beispielsweise menschlicher Fehler ausgeschlossen werden, der in einem Vertauschen zweier Bauteile, welche zwar oberflächlich identisch erscheinen, jedoch minimale Unterschiede hinsichtlich der Konstruktion aufweisen, ausgeschlossen werden.

Bestehende Verfahren und Vorrichtung liefern jedoch entweder zu wenig und/oder zu ungenaue Informationen, um mit ausreichender Zuverlässigkeit eine exakte Entfernung der aufgebrachten Beschichtung von den Kühlfluidöffnungen der Oberfläche zu gewährleisten. Oder die Messungen sind zu zeitintensiv oder unflexibel, um in einem realen industriellen Prozess sinnvoll eingesetzt zu werden. Insbesondere für den Wartungsfall von Strömungsmaschinen sind entsprechende Wartungsvorgänge möglichst schnell durchzuführen ohne hierbei jedoch die erforderliche Präzision außer Acht zu lassen, da entsprechende Verzögerungen zu hohen Zusatzkosten oder gar Schäden führen können.

Somit besteht der Bedarf ein Verfahren zur Verfügung zu stellen, mit dem ein derartiger Beschichtungsschritt mit nachfolgender Öffnung entsprechender Kühlfluidöffnungen vereinfacht und/oder beschleunigt werden kann. Ferner besteht der Bedarf an einer Vorrichtung, die ein derartiges Verfahren ermöglicht.

Diese Aufgaben werden durch das Verfahren, die Vorrichtung und die Verwendung gemäß den unabhängigen Ansprüchen gelöst. Die abhängigen Ansprüche enthalten vorteilhafte Ausgestaltungen der Erfindung, welche weitere Vorteile bereitstellen, die auch zusätzliche Probleme lösen können.

Gemäß einem Aspekt betrifft die vorliegende Erfindung ein Verfahren gemäß Anspruch 1.

Dass erfindungsgemäße Verfahren ermöglicht überraschenderweise insbesondere die automatisierte Bereitstellung der zur Bearbeitung erforderlichen Daten hinsichtlich der exakten Position der Kühlfluidöffnungen des Bauteils nach dem Aufbringen einer Beschichtung auf diese Kühlfluidöffnungen. Hierbei wurde gefunden, dass ein derartiges zweiteiliges Verfahren der Oberflächenanalyse unter Verwendung verschiedener Messvorrichtungen mit insbesondere unterschiedlicher Auflösung ausreichend Daten erhalten werden können, um eine automatisierte und hochpräzise Wiedereröffnung der Kühlfluidkanäle zu ermöglichen.

Gemäß einem weiteren Aspekt betrifft die vorliegende Erfindung eine Vorrichtung zur Oberflächenanalyse eines Bauteils gemäß Anspruch 10.

Beispielsweise kann die Messvorrichtung zur Bestimmung der Positionen der Kühlfluidöffnungen auf der Oberfläche des Bauteils oder die Befestigung zum indirekten, lösbaren Befestigen des Bauteils beweglich sein. Als direkte Befestigung wird verstanden, wenn das Bauteil über, in der Vorrichtung enthaltene Bestandteile, fixiert wird, welche typischerweise nicht für jeden Vorgang aus der Vorrichtung entfernt werden und direkt die Oberfläche des Bauteils kontaktieren. Hingegen eine indirekte Befestigung bezeichnet in der Vorrichtung enthaltene Bestandteile, an denen eine Halterung befestigt wird, welche wiederum die Oberfläche des Bauteils kontaktieren. Eine derartige Halterung kann aus einem oder mehreren Elementen bestehen. Trotz der zusätzlichen Kosten ist die Verwendung einer derartigen Halterung und indirekten Befestigung an der Vorrichtung für viele Anwendungsfälle vorteilhaft, da diese mit dem Bauteil aus der Vorrichtung entnommen werden kann. Hierbei bleibt eine gewisse grundlegende Orientierungsposition des Bauteils erhalten und ansonsten labile Bauteile können temporär mit einem stabilen Bodenelement versehen werden, der ein einfaches Abstellen der Bauteile ermöglicht.

Gemäß einem weiteren Aspekt betrifft die vorliegende Erfindung eine Verwendung des erfindungsgemäßen Verfahrens und/oder der erfindungsgemäßen Vorrichtung bei der Herstellung oder Instandsetzung von Bauteilen einer Strömungsmaschine. Der Begriff "Instandsetzung" umfasst hierbei Reparaturarbeiten und Wiederaufbereitungen von Bauteilen beispielsweise während Wartungsvorgängen. Beispiele derartiger Strömungsmaschinen sind Gasturbinen, wie sie unter anderem in einem Flugzeug oder einem Kraftwerk eingesetzt werden, Dampfturbinen und Kompressoren.

Gemäß einem weiteren Aspekt betrifft die vorliegende Erfindung eine Verwendung von Daten eines Bauteils, die in Schritt b) des erfindungsgemäßen Verfahrens erhalten wurden zur Erzeugung eines korrigierten Modells eines Bauteils basierend auf vorliegenden Konstruktionsdaten.

Für ein vollständigeres Verständnis der vorliegenden Erfindung wird auf die nachfolgende ausführliche Beschreibung und der in Verbindung hiermit beschriebenen Abbildungen verwiesen. Die Abbildungen sind hierbei jedoch nur als Verdeutlichung der Erfindung zu verstehen und stellen nur besonders bevorzugte Ausführungsformen und keine Einschränkung der Erfindung dar.

Abbildung 1 zeigt eine schematische Darstellung einer Turbinenschaufel, wobei gut die Kühlfluidöffnungen im oberen Teil ersichtlich sind, welche während eines Beschichtungsverfahrens zumindest teilweise verschlossen werden.

Abbildung 2 zeigt schematisch die dreidimensionale Form einer Kühlfluidöffnung, die in Schritt b) des erfindungsgemäßen Verfahrens bestimmt wurde.

Abbildung 3 zeigt ein Schema eines erfindungsgemäßen Prozesses.

Das erfindungsgemäße Verfahren ist beispielsweise besonders geeignet für Wartungsprozesse von Bestandteilen einer Turbine, eines Kompressors oder einer Brennkammer, die eine Filmkühlung aufweisen. Neben der erhöhten Geschwindigkeit derartiger Wartungsprozesse kann die Fehleranfälligkeit deutlich reduzieren, da beispielsweise die reell vorliegenden Positionen der Öffnungen bestimmt und zur Bearbeitung genutzt werden. Da typischerweise von einer begrenzten Reparaturmöglichkeit entsprechender Bauteil ausgegangen wird, stellt das erfindungsgemäße hochpräzise Verfahren mit optimierten Ablauf und verbesserter Fehleranfälligkeit auch eine Erhöhung der Lebensdauer das Bauteil bereit.

Typischerweise ist es möglich basierend auf Interpolationsprozessen und/oder Konstruktionsdaten die Lage der weiteren Kühlfluidöffnungen typischerweise hinreichend genau vorherzusagen. Zur weiteren Erhöhung der Genauigkeit des Verfahrens und der Verringerung von Fehlern, beispielsweise infolge von Produktionsschwankungen oder hohen Fehlertoleranzen bei der Fertigung, kann es jedoch bevorzugt sein eine große Menge gemessener Daten zur Verfügung zu stellen. Typischerweise ist es bei weiteren Ausführungsformen bevorzugt, dass die dreidimensionale Form von mindestens 50 %, mehr bevorzugt mindestens 70 %, noch mehr bevorzugt mindestens 80 %, der Kühlfluidöffnungen bestimmt wird. Ferner kann es bei weiteren Ausführungsformen bevorzugt sein, dass die dreidimensionale Form von mindestens 95 %, mehr bevorzugt mindestens 99 %, noch mehr bevorzugt aller Kühlfluidöffnungen, bestimmt wird.

Auch wenn mittels Interpolation anhand von beispielsweise Konstruktionsdaten die Position weiterer Kühlfluidöffnungen anhand der Position einer Referenzöffnung bestimmt werden kann, ist es typischerweise bevorzugt die Position einer grö-ßeren Anzahl an Kühlfluidöffnungen zu bestimmen. In weiteren Ausführungsformen ist es daher bevorzugt, dass in Schritt b) die Position von mindestens 10 %, mehr bevorzugt von mindestens 30 %, noch mehr bevorzugt von mindestens 60 %, der Kühlfluidöffnungen bestimmt wird. Insbesondere ist es typischerweise bevorzugt, dass die Position von mindestens 80 %, mehr bevorzugt mindestens 99 %, noch mehr bevorzugt 100 %, der Kühlfluidöffnungen bestimmt werden. Die Bestimmung der Position aller Kühlfluidöffnung ist insbesondere vorteilhaft, wenn keine Konstruktionsdaten vorhanden sind oder die Verlässlichkeit der Konstruktionsdaten angezweifelt werden muss.

Zur Bereitstellung einer besonders schnellen und hochgenauen Messung ist es für typische Anwendungsfälle bevorzugt unterschiedliche Messverfahren in den Schritten der zweiteiligen Oberflächenanalyse einzusetzen. Die beiden Teile der zweiteiligen Oberflächenanalyse werden mit unterschiedlichen Messvorrichtungen durchgeführt. Typischerweise ist es insbesondere bevorzugt, dass die Messvorrichtungen unterschiedliche Messverfahren einsetzen. Beispielsweise kann eine Messvorrichtung beruhend auf Lasertriangulationsverfahren oder Streifenlichtprojektion mit einem Messgerät beruhend auf Interferometrie eingesetzt werden, um besonders hochwertige Messergebnisse besonders schnell zu erhalten.

In weiteren Ausführungsformen umfasst das erfindungsgemäße Verfahren zwischen Schritt b) und d) eine Auswertung der in Schritt b) erhaltenen Daten, wobei gegebenenfalls ein beschädigter Randbereich der mindestens einen Kühlfluidöffnung mittels Fit-Prozessen korrigiert wird, um die ursprüngliche Form der mindestens einen Kühlfluidöffnung zu erhalten. Dieses ist beispielsweise besonders vorteilhaft, wenn die Daten des sich an die mindestens eine Kühlfluidöffnung anschließenden Kühlfluidkanals mittels Interpolation erhalten werden sollen. Überraschenderweise zeigte sich, dass aus der exakten dreidimensionalen Form und den hierin enthaltenen Krümmungen der Oberfläche sowie gegebenenfalls darin erhaltenen Daten betreffend den Anfangsbereich des Kühlfluidkanals mittels Fit-prozessen mit hoher Genauigkeit die Form und Ausrichtung eines sich hierin anschließenden Kühlkanals bestimmt werden kann. Zwar können Kühlfluidkanäle auch komplexe Formen aufweisen, die mit einem bestimmten Abstand zur Kühlfluidöffnung nicht interpoliert werden kann. Jedoch hat sich gezeigt, dass für die erfindungsgemäße Wiedereröffnung der Kühlfluidöffnungen der sich an die Kühlfluidöffnungen direkt anschließende Bereich der Kühlfluidkanäle hinreichend genau interpoliert werden kann, wobei dieser Bereich ausreichend ist, um hochpräzise Wiedereröffnung durchzuführen.

In weiteren Ausführungsformen werden die in Schritt b) erhaltenen Daten mit Konstruktionsdaten, wie beispielsweise CAD-Daten des Bauteils abgeglichen. Es zeigte sich überraschenderweise, dass der Vergleich mit den idealen Konstruktionsdaten typischerweise vorteilhaft ist. Beispielsweise können hiermit die Interpolationen zur Bestimmung der Kühlfluidkanäle drastisch vereinfacht werden. Durch einfaches zuordnen der theoretischen Daten aus den Konstruktionsdaten zu den real gemessenen Daten, können unter anderem verwendbare Daten aus den Konstruktionsdaten identifiziert werden und die Datenverarbeitung der Messdaten auf die infolge der Abweichungen erforderlichen Berechnung und Interpolation reduziert werden.

In weiteren Ausführungsformen umfasst das Abgleichen der erhaltenen Daten mit den Konstruktionsdaten einen Plausibilitätsscheck, wobei der Plausibilitätscheck insbesondere die Anzahl und Position der Kühlfluidöffnungen, sowie die Form und Ausrichtung der Kühlfluidkanäle umfasst, und wobei bei signifikanten Abweichungen eine definierte Aktion ausgelöst wird. Auch kann beispielsweise auf unzulässige Abweichungen der Gesamtform des Bauteils geprüft werden. Der Begriff "signifikante Abweichung" im Sinne der vorliegenden Erfindung bezeichnet deutliche Abweichungen, wobei der Fachmann die Grenze einer derartigen signifikanten Abweichung basierend auf seinem allgemein Fachwissen und/oder Kundenspezifikation festlegen kann. Beispielsweise wählt er hierbei Grenzen aus, bei deren Überschreitung das Bauteil nicht mehr den vorliegenden Anforderungen gerecht werden würde. Ferner kann der Fachmann beispielsweise Obergrenzen von Abweichung festlegen, welche auf Produktionsschwankungen und/oder entsprechend Fehlertoleranzen beruhen. Hierdurch wird es beispielsweise möglich, fehlerhaft zugeordnete Bauteile zu identifizieren und diese beispielsweise entweder automatisiert auszusondern oder durch ein entsprechendes Feedback die Aufmerksamkeit der Mitarbeiter hierauf zu lenken. Auch können beispielsweise zu starke Schäden an den Kühlfluidöffnungen detektiert werden, sodass entsprechende Bauteile vor dem Beschichtungsprozess ausgesondert und gegebenenfalls repariert werden können.

In weiteren Ausführungsformen wird ein korrigiertes Modell des Bauteils basierend auf den in Schritt b) erhaltenen Daten erzeugt, wobei vorhandene Konstruktionsdaten korrigiert werden. Typischerweise erwies sich als besonders vorteilhaft, ein korrigiertes Modell des Bauteils basierend auf den gemessenen Daten zu erzeugen. Einerseits können hierbei bestehende Systeme, welche bereits mit den Konstruktionsdaten und entsprechenden Modellen arbeiten, genutzt werden. Weiterhin erlaubt dies insbesondere die reelle Form des entsprechenden Bauteils aufzuzeichnen. Dies erlaubt beispielsweise die Veränderung der Bauteile im Lauf der Zeit aufzuzeichnen. Diese Daten können wiederum zur Optimierung der Bauteile genutzt werden. Ferner ermöglicht dies die eindeutige Identifikation der Bauteile, was beispielsweise im Falle späterer Regressansprüche relevant sein kann.

In weiteren Ausführungsformen wird ein vereinfachtes Modell des Bauteils basierend auf den in Schritt b) erhaltenen Daten erzeugt. Hierbei umfasst dieses vereinfachte Modell die Positionen der Kühlfluidöffnungen sowie Informationen betreffend der Kühlfluidöffnungen. Die Informationen betreffend der Kühlfluidöffnungen können beispielsweise die Form der Kühlfluidöffnungen sowie der Form und Ausrichtung der sich anschließenden Kühlfluidkanäle umfassen. Als Basis dieses Modells kann beispielsweise die äußere Form des Bauteils oder das Koordinatensystem der Vorrichtung sein. Dies erlaubt insbesondere eine Bearbeitung ohne Kenntnis der ursprünglichen Konstruktionsdaten. Ferner werden die Rechenvorgänge deutlich reduziert, sodass beispielsweise Anlagen mit niedrigerer Rechenleistung hierfür eingesetzt werden können. Zwar können hiermit beispielsweise weniger Daten für eine Langzeitbeobachtung der Veränderung des Bauteils erhalten werden, jedoch erwies sich dies als typischerweise ausreichend, sofern lediglich die Kühlfluidöffnungen und Kühlfluidkanäle des Bauteils im Fokus stehen.

In weiteren Ausführungsformen erfolgt zunächst eine Rotation des Bauteils zur schnellen Bestimmung der Position der Kühlfluidöffnungen auf der Oberfläche des Bauteils, bevor gezielt die dreidimensionale Form der mindestens einen Kühlfluidöffnung bestimmt wird. Typischerweise ist es vorteilhaft, dass zunächst eine Bestimmung der Position der Kühlfluidöffnungen erfolgt, bevor die Form der mindestens einen Kühlfluidöffnungen bestimmt wird. Insbesondere wird hierdurch das Verfahren dahingehend vereinfacht, dass die typischerweise deutlich unterschiedlichen Geschwindigkeiten der beiden Teile der Oberflächenanalyse sich nicht gegenseitig stören.

In weiteren Ausführungsformen ist es hingegen bevorzugt, dass die generelle Vermessung der Oberfläche und die genaue Vermessung der Kühlfluidöffnungen zumindest teilweise gleichzeitig erfolgen. Zwar ist ein derartiger Vorgang komplexer, jedoch kann hiermit beispielsweise ein besonders Zeit effizienter Vorgang erreicht werden. So kann beispielsweise das Bauteil im Inneren der Vorrichtung gedreht werden, während auf einer Seite die ungenaue generelle Vermessung der Oberfläche erfolgt, während an einer bereits vermessenen Stelle die im Verlauf der Rotation bereits aufgefundenen Kühlfluidöffnungen der Oberfläche präzise vermessen werden. Dieses kann beispielsweise vorteilhaft sein, wenn vergleichbare Bauteile hintereinander bearbeitet werden sollen. Der resultierende Zeitgewinn bei der Oberflächenanalyse kann hierbei den zusätzlichen Zeitaufwand und Arbeitsaufwand für die speziell angepasste Prozessführung der Oberflächenanalyse ausgleichen. In weiteren Ausführungsformen wird nach dem Vermessen der Oberfläche und der Position der Kühlfluidöffnungen, vorzugsweise unter Heranziehen der Konstruktionsdaten, mindestens eine Kühlfluidöffnung als Referenzpunkt ausgewählt. Hierbei wird insbesondere die Lage und Bestimmbarkeit der genauen Position der Kühlfluidöffnung sowie des sich anschließenden Kanals berücksichtigt. Vorzugsweise werden hierbei auch Abweichung von der Idealgeometrie berücksichtigt und beispielsweise beschädigte Kühlfluidöffnungen weniger bevorzugt als Referenzpunkt gewählt. Neben dem reellen Einsatz der Referenzöffnung als Referenzpunkt für die Interpolation weiterer Kühlfluidöffnungen kann eine derartige Referenzöffnung auch beispielsweise zur Qualitätskontrolle und dem Abgleich mit den Konzeptionsdaten genutzt werden.

Erfindungsgemäß werden die Position der Kühlfluidöffnungen und die dreidimensionale Form der mindestens einer Kühlfluidöffnung mit unterschiedlichen Messvorrichtungen bestimmt. Für typische Anwendungsfälle wurde beobachtet, dass die Verwendung verschiedener Messvorrichtung anstelle beispielsweise einer Messvorrichtung, welche mit unterschiedlicher Auflösung betrieben wird, typischerweise genauere Ergebnisse erzielt werden. Messverfahren wie Rotations-Lasertriangulation und auf Interferometrie basierende Messverfahren haben sich für typische Anwendungsfälle als vorteilhaft erwiesen. Beispielsweise kann zur Bestimmung der Position der Kühlfluidöffnungen Rotations-Lasertriangulation eingesetzt werden, während zur Bestimmung der Form der mindestens einen Kühlfluidöffnungen ein Interferometer genutzt wird.

In weiteren nicht beanspruchten Ausführungsformen wird die Position der Kühlfluidöffnungen und die dreidimensionale Form der mindestens einen Kühlfluidöffnungen mit der gleichen Messvorrichtung bestimmt werden. Zwar kann es für viele Anwendungen vorteilhaft sein verschiedene Messvorrichtung einzusetzen, um die beiden Teile des Oberflächenscans durchzuführen, da hierbei typischerweise genauere Daten erhalten werden. Zur Bereitstellung einer besonders einfach konstruierten Vorrichtung kann es jedoch bevorzugt sein dieselbe Messvorrichtung für beide Messungen einzusetzen. Hierbei wird insbesondere eine typischerweise deutlich unterschiedliche Auflösung der Messvorrichtung bei den beiden Teilen der Oberflächenanalyse genutzt. Beispielsweise kann hierdurch der Platzbedarf der Vorrichtung erinnert werden oder bei gleichem Platzbedarf Platz bereitgestellt werden innerhalb der Vorrichtung, um weitere Funktionen zu integrieren. Es zeigte sich überraschenderweise, dass auf diese Weise typischerweise ausreichend Messdaten erhalten werden, um die Kühlfluidöffnungen mit hinreichender Genauigkeit wiederherstellen zu können.

Ferner hat es sich typischerweise als vorteilhaft erwiesen die erhaltenen Messdaten oder hiermit erzeugte Daten zu speichern. Beispielsweise kann die Speicherung hierbei auf einem transportablen Speichermedium oder einer in ein Netzwerk eingebundenen Speichereinheit erfolgen. Nachfolgend kann beispielsweise die transportable Speichereinheit mit der anderen Vorrichtung zur Öffnung der Kühlfluidöffnungen verbunden werden oder die entsprechende Vorrichtung kann die erhaltenen Daten über eine Netzwerkverbindung von der in das Netzwerk eingebundenen Speichereinheit abrufen. Auch sollten nachfolgende Bearbeitungsschritte in der gleichen Vorrichtung durchgeführt werden, so hat es sich typischerweise als vorteilhaft erwiesen die Daten extern zu speichern. Beispielsweise kann hierdurch eine erhöhte Datensicherheit gewährleistet werden und auch bei Beschädigung der Vorrichtung zwischen insbesondere den erfindungsgemäßen und nachfolgenden Schritten können die Daten für eine ersatzweise genutzte Vorrichtung eingesetzt werden.

In weiteren Ausführungsformen wird bei der Auswertung der Daten in Schritt c) ein beschädigter Randbereich der mindestens einen Kühlfluidöffnung mittels Fit-Prozessen korrigiert, um die ideale Form der mindestens einen Kühlfluidöffnung, sowie Position und die ideale Form und Ausrichtung des anschließenden Kühlfluidkanals zu erhalten. Als ideale Form und Ausrichtung wird hierbei die Ursprünge nicht beabsichtigte Form und Ausrichtung des entsprechenden Bestandteils bezeichnet, die infolge der ursprünglichen Konstruktion erzielt werden sollte. Abweichungen hiervon resultieren typischerweise aus Produktionsschwankungen, Fehlertoleranzen oder Beschädigungen.

In weiteren Ausführungsformen umfasst das erfindungsgemäße Verfahren nach Schritt d) einen Schritt e), wobei
e) das Bauteil nach dem Entfernen der Beschichtung im Bereich der Kühlfluidöffnung erneut einer Oberflächenanalyse in einer erfindungsgemäßen Vorrichtung, vorzugsweise der Vorrichtung, unterzogen wird. Dies ermöglicht beispielsweise eine Qualitätskontrolle, welche insbesondere für hochbelastete Bauteile, wie sie in einer Strömungsmaschine im Strömungskanal verbaut sind, interessant ist. Beispielsweise in den Turbinenschaufeln. Auch kann ein Modell des fertigen Bauteils oder des instandgesetzten Bauteils erzeugt und gespeichert werden, um nachfolgende Fragen hierzu zu beantworten, dem Kunden das Erfüllen der gewünschten Spezifikation zu belegen oder nachfolgende Beobachtung während des Betriebs mit der realen Form des Bauteils zu korrelieren.

Besonders vorteilhaft kann die erfindungsgemäße Vorrichtung und/oder das erfindungsgemäße Verfahren, wie bereits ausgeführt wurde, bei der Herstellung oder Instandsetzung von Bauteilen einer Strömungsmaschine verwendet werden.

Grundsätzlich kann das Bauteil insbesondere jedes mit Kühlfluidöffnungen versehene Bauteil einer Strömungsmaschine sein. Beispiele entsprechender Strömungsmaschinen sind Dampfturbinen und Gasturbinen. In weiteren Ausführungsformen wird das Bauteil ausgewählt aus der Gruppe bestehend aus Schaufeln und Hitzeschilden einer Strömungsmaschine. Beispielsweise handelt es sich hierbei um eine Leitschaufel oder Laufschaufel. Derartige Leitschaufeln und Laufschaufeln finden sich beispielsweise in der Turbineneinheit von Dampfturbinen und Gasturbinen oder auch in der Kompressoreinheit von Gasturbinen, welche eine Turbomaschine darstellen. Entsprechende Bauteile sind besonders hohen Belastungen ausgesetzt. Demgemäß sind regelmäßige Wartung umfassend auch das Entfernen einer vorhanden Beschichtung und Aufbringung einer neuen Beschichtung erforderlich. Demgemäß profitieren entsprechende Bauteile sowie entsprechende Prozesse bezogen auf diese Bauteile besonders von dem erfindungsgemäßen Verfahren und Verwendung der erfindungsgemäßen Vorrichtung.

Typischerweise werden entsprechende Bauteile zumindest teilweise aus hochtemperaturbeständigen Legierungen gefertigt wie eisen-, nickel- oder kobaltbasierte Superlegierungen. Solche Superlegierungen sind beispielsweise aus der EP 1 204 776 B1, EP 1 306 454, EP 1 319 729 A1, WO 99/67435 oder WO 00/44949 bekannt. Beispielsweise werden häufig Nickel-Superlegierungen eingesetzt, da diese für viele Anwendungsfälle vorteilhaft sind. Hierbei ist es ferner bevorzugt, dass die entsprechenden Bauteile einkristallin sind (SX-Struktur).

Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.

Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichtemachen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).

Solche Verfahren sind aus der US-PS 6,024,792 und der EP 0892090 A1 bekannt.

Ebenso können die Bauteile Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0486489 B1, EP 0786017 B1, EP 0412397 B1 oder
EP 1306454 A1.

Die Dichte liegt vorzugsweise bei 95% der theoretischen Dichte.

Auf der MCrAlX-Schicht (als Zwischenschicht oder als äußerste Schicht) bildet sich eine schützende Aluminiumoxidschicht (TGO = thermal grown oxide layer).

Vorzugsweise weist die Schichtzusammensetzung Co-30Ni-28Cr-8Al-0,6Y-0,7Si oder Co-28Ni-24Cr-10Al-0,6Y auf. Neben diesen kobaltbasierten Schutzbeschichtungen werden auch vorzugsweise nickelbasierte Schutzschichten verwendet wie Ni-10Cr-12Al-0,6Y-3Re oder Ni-12Co-21Cr-11Al-0,4Y-2Re oder Ni-25Co-17Cr-10Al-0,4Y-1,5Re.

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.

Die Wärmedämmschicht bedeckt die gesamte MCrAlX-Schicht.

Durch geeignete Beschichtungsverfahren wie z.B. Elektronenstrahlverdampfen (EB-PVD) werden stängelförmige Körner in der Wärmedämmschicht erzeugt.

Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrAlX-Schicht.

Wiederaufarbeitung (Refurbishment) bedeutet, dass Bauteile nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse oder sonstige Beschädigungen im Bauteil repariert. Danach erfolgt eine Wiederbeschichtung des Bauteils, um den erneuten Einsatz des Bauteils zu.

Die erfindungsgemäßen Vorrichtungen sind besonders geeignet zur Oberflächenanalyse von Bauteilen, welche in Strömungsmaschinen eingesetzt werden und dem Strom des darin verwendeten Fluids ausgesetzt sind. Überraschenderweise zeigte sich, dass die erfindungsgemäßen Vorrichtungen mit unter anderem der Möglichkeit zur zweiteiligen Oberflächenanalyse bei minimalen Aufwand und maximaler Geschwindigkeit die für derartige Fälle erforderlichen Daten liefern können.

Erfindungsgemäß weist die Vorrichtung mindestens zwei Messvorrichtungen auf. Zwar steigt hierdurch der Aufwand der Bereitstellung der Vorrichtung, jedoch zeigte sich überaschenderweise, dass dieser Mehraufwand durch beispielsweise die erhöhte Geschwindigkeit bei synchronen Messungen auf verschiedenen Seiten des Bauteils mehr als kompensiert wird. Beispielsweise zeigte sich überaschenderweise, dass der erzielte Zeitgewinn für das erfindungsgemäße Verfahren besonders relevant ist, da hierdurch der Zeitverlust durch die zweiteilige Oberflächenanalyse ausgeglichen werden kann und die Gesamteffizienz des Verfahrens signifikant erhöht wird. Auch der Einsatz unterschiedlicher Messvorrichtungen hat sich als überraschend vorteilhaft für das erfindungsgemäße Verfahren erwiesen.

In weiteren Ausführungsformen weist die Vorrichtung eine bewegliche Messvorrichtung auf, wobei die bewegliche Messvorrichtung einen Roboterarm aufweist. Dies hat sich beispielsweise als besonders vorteilhaft erwiesen, wenn komplexe Formen an Bauteilen, wie beispielsweise Schaufeln, insbesondere Leitschaufeln und Laufschaufeln, vermessen werden sollen. Auch kann hierbei eine hochpräzise Analyseeinheit besonders einfach angewinkelt oder an das Bauteil, welches vermessen werden soll, herangeführt werden. Typischerweise ist es bevorzugt, dass die Messvorrichtung zur Bestimmung der dreidimensionalen Form der mindestens einen Kühlfluidöffnungen beweglich ist.

In weiteren Ausführungsformen weist die Vorrichtung eine bewegliche Messvorrichtung auf und die bewegliche Messvorrichtung kann um mindestens 10°, mehr bevorzugt mindestens 20°, noch mehr bevorzugt mindestens 25°, gekippt werden. Es zeigte sich, dass bereits durch die Möglichkeit die Analyseeinheit um derart geringe Winkel zu kippen eine deutlich flexiblere und genauere Analyse ermöglichte. Insbesondere kann hierbei in Anbetracht beispielsweise der Ausrichtung der Kühlfluidkanäle, welche sich an die Kühlfluidöffnung anschließen, eine bessere Ausrichtung der Analyseeinheit erhalten werden, sodass die Messergebnisse einen bedeutend höheren Genauigkeitsgrad aufweisen. Beispielsweise kann die Messvorrichtung zumindest teilweise in Richtung des Kühlfluidkanals gekippt werden, um auch einen größeren Teil des Anfangsbereichs des Kühlfluidkanals zu erfassen.

Erfindungsgemäß stellt die Vorrichtung unterschiedliche Messvorrichtungen für die beiden Teile der Oberflächenanalyse bereit. Die Bereitstellung verschiedener Messvorrichtungen, welche an die jeweilige Messung auch insbesondere durch die Verwendung unterschiedlicher Messverfahren angepasst sind, hat sich insbesondere für zur Bereitstellung qualitativ hochwertigerer Daten als vorteilhaft erwiesen.

In weiteren nicht beanspruchten Ausführungsformen stellt die Vorrichtung mindestens eine Messvorrichtung bereit, die in unterschiedlichen Modi betrieben werden kann und geeignet ist beide Teile des Oberflächenscans nacheinander durchzuführen. Dies erlaubt beispielsweise die Bereitstellung besonders einfach konstruierter und kostengünstiger erfindungsgemäßer Vorrichtungen.

In weiteren nicht beanspruchten Ausführungsformen wird die Position der Kühlfluidöffnungen und die dreidimensionale Form der mindestens einen Kühlfluidöffnungen mit der gleichen Messvorrichtung bestimmt werden. Zwar kann es für viele Anwendung vorteilhaft sein verschiedene Messvorrichtung einzusetzen, um die beiden Messungen durchzuführen, da hierbei typischerweise genauere Daten erhalten werden. Zur Bereitstellung einer besonders einfach konstruierten Vorrichtung kann das jedoch bevorzugt sein dieselbe Messverfahren für beide Messungen einzusetzen. Beispielsweise kann hierdurch der Platzbedarf der Vorrichtung erinnert werden oder bei gleichem Platzbedarf Platz bereitgestellt werden innerhalb der Vorrichtung, um weitere Funktionen zu integrieren. Es zeigte sich überraschenderweise, dass auf diese Weise typischerweise ausreichend Messdaten erhalten werden, um die Kühlfluidöffnungen mit hinreichender Genauigkeit wiederherstellen zu können.

In weiteren Ausführungsformen ist die mindestens eine Befestigung der Vorrichtung beweglich und die bewegliche Befestigung ist geeignet eine Rotation des Bauteils um mindestens 270° bereitzustellen.

Diese Vorrichtung erwiesen sich typischerweise als besonders vorteilhaft, da bereits mit geringer Bewegungsmöglichkeit der Sensoreinheit eine vollständige Vermessung des Bauteils erfolgen kann. Beispielsweise kann auch bei Bereitstellung einer Rotation um mindestens 360° theoretisch auf eine Beweglichkeit der Analyseeinheit zur Bestimmung der Positionen der Kühlfluidöffnungen zumindest in 2 Achsen oder gänzlich verzichtet werden. Beispielsweise kann es dann in diesen Fällen ausreichend sein eine Beweglichkeit der Analyseeinheit entlang einer Schiene zu ermöglichen, an denen die Analyseeinheit auf und ab bewegt wird, während vor ihr das Bauteil gedreht wird. Insbesondere bei empfindlichen Analyseeinheiten, bei denen unnötige Bewegungen vermieden werden sollen, hat sich dies als besonders vorteilhaft erwiesen.

Die erfindungsgemäße Verwendung der Daten, die in Schritt b) des erfindungsgemäßen Verfahrens erhalten wurden, zur Erzeugung eines korrigierten Modells basierend auf vorliegenden Konstruktionsdaten. Dies ermöglicht beispielsweise ein Modell des reell vorliegenden Bauteils zu erhalten, wobei Produktionsschwankungen und Abweichungen infolge von Fehlertoleranzen durch die Messung korrigiert werden. Dies ist beispielsweise von Vorteil für Simulationen, bei denen basierend auf dem Modell beispielsweise die Lebensdauer des Bauteils unter verschiedenen Bedingungen simuliert wird.

Ferner ist dies beispielsweise vorteilhaft für eine Eingangskontrolle vorgefertigte Bauteile oder zur optimierten automatisierten Bearbeitung und/oder Wartung entsprechender Bauteile. Aufgrund von Produktionsfehlern und/oder Fehlertoleranzen weichen reale Bauteile typischerweise zumindest minimal von den theoretischen Konstruktionsdaten ab. Aufgrund der in den letzten Jahren gestiegenen Anforderungen sind geringfügige Abweichungen insbesondere für nachfolgende Wartungsarbeiten oder optimierte Simulationsprozesse, bei denen hochgenau beispielsweise die Lebensdauer eines Bauteils vorhergesagt wird, stetig gewachsen. Da mittels dem erfindungsgemäßen Verfahren und/oder Verwendung der erfindungsgemäßen Vorrichtung mit einfachen Mitteln hochrelevante Informationen zur realen Beschaffenheit des Bauteils erhalten werden, aus denen wiederum auch weitere Merkmal abgeleitet werden können, hat sich dies als besonders vorteilhaft erwiesen.

Vorzugsweise ist das korrigierte Modell geeignet, um ein automatisiertes Öffnen der Kühlfluidöffnungen nach einer Beschichtung des Bauteils zu ermöglichen. Hierzu kann beispielsweise eine erfindungsgemäße Vorrichtung eingesetzt werden.

Nachfolgend soll die Erfindung anhand einzelner Abbildungen im Detail näher beschrieben werden. Hierbei ist darauf hinzuweisen, dass die Abbildungen lediglich schematisch zu verstehen sind, und daraus keine mangelnde Ausführbarkeit der Erfindung ableitbar ist. Insbesondere sind sie nicht als Einschränkung der Erfindung zu verstehen, deren Umfang lediglich durch die Ansprüche spezifiziert wird.

Weiterhin ist darauf hinzuweisen, dass die nachfolgend dargestellten technischen Merkmale in beliebiger Kombination miteinander beansprucht werden sollen, soweit diese Kombination eine Lösung der Erfindungsaufgabe erreichen kann.

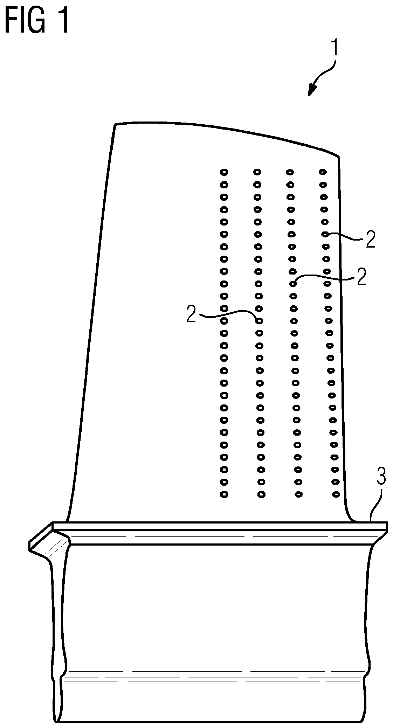

Abbildung 1 zeigt schematisch die Außenseite einer Turbinenschaufel 1 als Beispiel des Bauteils umfassend eine Vielzahl von Kühlfluidöffnungen 2, die sich an die Kühlkanäle der Turbinenschaufel 1 anschließen. Im Verlaufe eines Reparaturverfahrens wird die vorhandene Beschichtung der Turbinenschaufel 1 entfernt, Schäden repariert und die Turbinenschaufel 1 erneut beschichtet. Im Verlaufe eines Herstellprozesses entfällt naturgemäß die Entfernung einer vorhandenen Beschichtung, sofern das Bauteil nicht infolge einer fehlerhaften Bearbeitung erneut dem Prozess unterzogen werden muss.

Die Beschichtung wird typischerweise auf dem Bereich oberhalb der Plattform 3 aufgebracht, da dieser Bereich während des Betriebs beispielsweise einer Gasturbine dem Fluidstrom ausgesetzt ist. Der Teil unterhalb der Plattform 3 ist nicht dem Fluidstrom ausgesetzt und kann daher ohne die zusätzliche Schutzbeschichtung eingesetzt werden. Die Ausformung des unteren Teils erlaubt die verlässliche Fixierung des Bauteils beispielsweise am Rotor einer Gasturbine. Aufgrund der unzureichenden Standfläche, muss das Bauteil während der Bearbeitungsschritte fixiert werden. Dies kann beispielsweise durch eine mobile Halterung erfolgen, welche den Bereich der Turbinenschaufel 1 unterhalb der Plattform 3 mechanisch greift und selbst an einer Befestigung in der erfindungsgemäßen Vorrichtung befestigt wird.

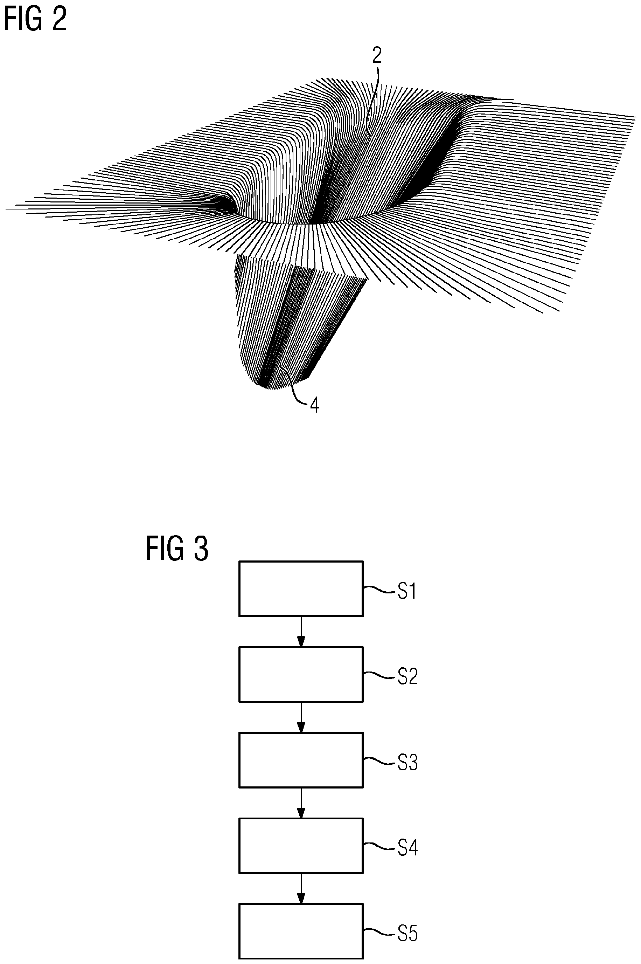

Abbildung 2 zeigt einen hochauflösenden Scan einer Kühlfluidöffnung 2, die sich an einen Kühlfluidkanal der in Abbildung 1 dargestellten Turbinenschaufel 1 anschließt. Hierbei ist gut die dreidimensionale Form der Kühlfluidöffnung 2, an welche sich der Anfangsbereich 4 des Kühlfluidkanals anschließt, ersichtlich, wobei auch der sich hieran anschließende Kühlfluidkanal ausreichend genau interpoliert werden kann.

Die hierbei beobachtbaren Unregelmäßigkeiten der Oberfläche resultierend aus Messungenauigkeiten und/oder Beschädigungen der Oberfläche einer Kühlfluidöffnung 2 können beispielsweise mittels Fitverfahren entfernt werden.

Abbildung 3 zeigt ein Fließschema des erfindungsgemäßen Verfahrens.

In S1 wird das Bauteil, wie beispielsweise die in Abbildung 1 dargestellte Turbinenschaufel 1, gemäß Schritt a) des erfindungsgemäßen Verfahrens in eine erfindungsgemäße Vorrichtung eingebracht.

Hierzu umfasst die Vorrichtung mindestens zwei Messvorrichtungen und mindestens eine Befestigung. An der Befestigung kann beispielsweise eine Halterung befestigt werden, welche wiederum den unteren Teil der in Abbildung 1 dargestellten Turbinenschaufel 1 klammert. Hiermit wird die Turbinenschaufel 1 während des erfindungsgemäßen Verfahrens in der Vorrichtung indirekt, lösbar fixiert.

In Schritt S2 erfolgt die Bereitstellung von Daten hinsichtlich der Position der Kühlfluidöffnungen 2 an der Oberfläche des Bauteils als auch der dreidimensionalen Form von mindestens einer Kühlfluidöffnung. Die Bestimmung der Daten erfolgt mittels verschiedener Messvorrichtungen.

Der Einsatz verschiedener Messvorrichtung erlaubt beispielsweise die parallele Bestimmung der Daten hinsichtlich der Position der Kühlfluidöffnungen, wie auch der der dreidimensionalen Form der mindestens einen Kühlfluidöffnung. Eine der beiden Messvorrichtungen ist hierbei geeignet eine großflächige Oberflächenanalyse durchzuführen, wobei die Positionen der Kühlfluidöffnungen 2 bestimmt werden. Beispielsweise kann hierbei eine Messvorrichtung eingesetzt werden, die mittels Rotations-Lasertriangulation arbeitet. Die andere der beiden Messvorrichtungen ist geeignet die dreidimensionale Form der Kühlfluidöffnungen 2 zu erfassen. Beispielsweise kann hierzu eine auf Interferometrie beruhende Messvorrichtung eingesetzt werden. Hierbei kann die Messvorrichtung zur Bestimmung der dreidimensionalen Form der mindestens einen Kühlfluidöffnung 2 beispielsweise an einem Roboterarm befestigt sein, der eine hohe Beweglichkeit der Messvorrichtung bereitstellt. Zur Verbesserung der Daten der dreidimensionalen Form der mindestens einen Kühlfluidöffnung 2 kann hierbei beispielsweise die entsprechende Messvorrichtung zumindest teilweise in Richtung des jeweilig sich anschließenden Kühlfluidkanals ausgerichtet werden, um mehr relevante Daten zu erhalten.

Alternativ hierzu kann auch eine nicht erfindungsgemäße Vorrichtung genutzt werden, die dieselbe Messvorrichtung für beide Teile der Oberflächenanalyse verwendet. Beispielsweise wird zunächst eine schnelle Messung mit niedriger Auflösung zur Bestimmung der Positionen der Kühlfluidöffnungen 2 durchgeführt, bevor mit hoher Auflösung die dreidimensionale Form der mindestens einen Kühlfluidöffnung 2 bestimmt wird. Dies ermöglicht einen deutlich einfacheren Aufbau der Vorrichtung, jedoch werden typischerweise weniger detaillierte Informationen erhalten.

Da der Zeitbedarf der beiden Teile des Oberflächenscans typischerweise unterschiedlich ist, kann es zur Bereitstellung eines allgemein anwendbaren Prozesses bevorzugt sein, dass die beiden Teile getrennt voneinander ausgeführt werden. Beispielsweise wird zunächst eine schnelle Rotation des Bauteils unter Bestimmung der Position Kühlfluidöffnungen 2 durchgeführt. Nachfolgend wird bei einer weiteren Rotation des Bauteils die exakte dreidimensionale Form der mindestens einen Kühlfluidöffnung 2 bestimmt.

Optional ist die Messvorrichtung zur genauen Vermessung der Kühlfluidöffnungen 2 hierbei an einem Roboterarm befestigt. Dies erlaubt eine optimale Positionierung dieser Messvorrichtung, um besonders hochqualitative Messdaten der Kühlfluidöffnungen 2 zu erhalten. Ferner kann durch eine Synchronbewegung entsprechend der Rotation des Bauteils insbesondere in einem synchronisierten Messprozess verschiedener Messvorrichtung eine weitere Verbesserung erzielt werden.

Typischerweise ist es zumindest bevorzugt, dass die Messvorrichtung zur exakten Vermessung der mindestens einen Kühlfluidöffnung 2 die Möglichkeit bietet zumindest um 10° gekippt zu werden. Dies erlaubt eine Anpassung der Ausrichtung der Messvorrichtung, um beispielsweise einen größeren Teil des sich an die Kühlfluidöffnung 2 anschließenden Kühlfluidkanals zu erlauben.

Nach diesem Analyseschritt kann die Turbinenschaufel 1 aus der erfindungsgemäßen Vorrichtung entnommen werden, um beispielsweise optionalen Bearbeitungsschritte und/oder die Beschichtung aufzubringen. Sofern die erfindungsgemäße Vorrichtung dafür geeignet ist, können derartige Schritte naturgemäß auch in dieser erfolgen.

In Schritt S3 erfolgt die Aufbringung einer Beschichtung auf das Bauteil, wobei die Kühlfluidöffnung 2 zumindest teilweise verschlossen wird. Typischerweise werden vorzugsweise eine keramische Beschichtung aufgebracht, welche typischerweise besonders vorteilhaft die Temperaturbeständigkeit erhöht. Diese kann mittels bekannter Verfahren appliziert werden.

In Schritt S4 erfolgt die Entfernung der Beschichtung im Bereich der Kühlfluidöffnung. Die Entfernung der Beschichtung kann beispielsweise unter Einsatz eines Bohrlasers oder anderer geeigneter Bohrer erfolgen. Hierbei erfolgt mittels der in Schritt S2 erhaltenen Daten eine exakte Entfernung der Beschichtung, sodass die geplante Kühlung wiederhergestellt wird.

In einem optionalen Schritt S5 kann nach dem Entfernen der Beschichtung im Bereich der mindestens einen Kühlfluidöffnung 2 in Schritt S4 erneut eine Vermessung mittels der Erfindung gemessen Vorrichtung analog S2 erfolgen. Jedoch kann auch beispielsweise lediglich die dreidimensionale Form einer oder mehrerer spezifischer Kühlfluidöffnungen 2 bestimmt werden. Anhand dieser Daten kann automatisiert eine Qualitätskontrolle der Bearbeitung erfolgen und insbesondere Fehler und/oder Schäden der Beschichtung insbesondere im Bereich der Kühlfluidöffnung 2 detektiert werden.

Sollten die im optionalen Schritt S5 oder in einem anderen alternativen Prüfschritt erhaltenen Daten auf Fehler bei der Beschichtung oder der Entfernung des Beschichtungsmaterials im Bereich der Kühlfluidöffnungen 2 hindeuten, so kann nachfolgend das Bauteil erneut dem erfindungsgemäßen Verfahren unterzogen werden. Beispielsweise nach einer Entfernung der Beschichtung außerhalb der erfindungsgemäßen Vorrichtung kann erneut das Verfahren ausgehend von S1 starten. Alternativ oder zusätzlich kann beispielsweise eine Qualitätskontrolle auch anhand einer Transmissionsprüfung durchgeführt werden, um den ungestörten Fluss des Kühlmediums durch die Kühlfluidkanäle zu testen.

Alternativ oder ergänzend hinzu kann in Schritt S5 ein Abgleich der erhaltenen Daten mit den Konstruktionsdaten wie beispielsweise CAD Daten des Bauteils erfolgen. Hierbei können relevante Änderungen auch automatisiert erkannt werden und beispielsweise zur Überprüfung an einen Experten übermittelt werden.

Alternativ oder ergänzend hierzu kann in Schritt S5 ein korrigiertes Modell des Bauteils erzeugt werden. Hierbei wird basierend auf vorhandenen Konstruktionsdaten unter Abgleich mit den gemessenen Daten der mindestens einen Kühlfluidöffnung 2 sowie der daran sich anschließenden Kühlfluidkanäle ein korrigiertes Modell des realen Bauteils erzeugt. Dieses Modell kann auch dahingehend vereinfacht werden, dass beispielsweise lediglich unbedingt erforderliche Daten, wie beispielsweise die äußere Form oder markante Stellen der äußeren Form, sowie die relative Lage der mindestens einen Kühlfluidöffnung 2 sowie die dazu zugehörigen Informationen aufgezeichnet werden.

Die vorliegende Erfindung wurde zur Erläuterungszwecken anhand von Ausführungsbeispielen näher beschrieben. Die Erfindung soll jedoch nicht auf die konkrete Ausgestaltung dieser Ausführungsbeispiele beschränkt sein. Vielmehr soll der Schutzbereich der Erfindung lediglich durch die beigefügten Ansprüche beschränkt sein.

## Patentansprüche

1. Verfahren zur Beschichtung eines Bauteils umfassend eine Oberfläche umfassend Kühlfluidöffnungen welche sich an Kühlfluidkanäle im Inneren des Bauteils anschließen, wobei das Verfahren folgende Schritte umfasst:
a) Einbringung des Bauteils in eine Vorrichtung zur Oberflächenanalyse des Bauteils,
wobei die Vorrichtung mindestens zwei Messvorrichtungen und mindestens eine Befestigung für das Bauteil umfasst,
wobei die Befestigung geeignet ist direkt oder indirekt lösbar mit dem Bauteil verbunden zu werden,
wobei die Vorrichtung geeignet ist eine zweiteilige Oberflächenanalyse durchzuführen, wobei in einem Teil der Oberflächenanalyse die Position der Kühlfluidöffnungen (2) auf der Oberfläche des Bauteils bestimmt wird und wobei in einem anderen Teil der Oberflächenanalyse die dreidimensionale Form von mindestens einer Kühlfluidöffnung (2) erfasst wird,
wobei mindestens ein Element aus der Gruppe bestehend aus der mindestens zwei unterschiedlichen Messvorrichtungen und der mindestens einen Befestigung beweglich ist,
b) Durchführen der Oberflächenanalyse des Bauteils, wobei Daten hinsichtlich der Position der Kühlfluidöffnungen (2) auf der Oberfläche des Bauteils und hinsichtlich die dreidimensionale Form von mindestens einer Kühlfluidöffnung (2) detektiert werden
c) Aufbringung einer Beschichtung auf das Bauteil, wobei die Kühlfluidöffnungen (2) zumindest teilweise, vorzugsweise vollständig, verschlossen wird
d) Entfernung der Beschichtung im Bereich der Kühlfluidöffnungen mittels der in Schritt b) erhaltenen Daten,
wobei die beiden Teile der zweiteiligen Oberflächenanalyse mit den unterschiedlichen Messvorrichtungen durchgeführt werden.

2. Verfahren gemäß Anspruch 1, wobei die unterschiedlichen Messvorrichtungen unterschiedliche Messverfahren einsetzen.

3. Verfahren gemäß einem der Ansprüche 1 bis 2, wobei die Bestimmung der Position der Kühlfluidöffnungen (2) auf der Oberfläche des Bauteils mittels Rotations-Lasertriangulation erfolgt und/oder die dreidimensionale Form von mindestens einer Kühlfluidöffnung (2) mittels eines Interferometers erfasst wird.

4. Verfahren gemäß einem der Ansprüche 1 bis 3, wobei die dreidimensionale Form von mindestens 50 % der Kühlfluidöffnungen (2) bestimmt wird.

5. Verfahren gemäß einem der Ansprüche 1 bis 4, wobei das Bauteil ausgewählt wird aus der Gruppe bestehend aus Schaufeln (1) und Hitzeschilden einer Strömungsmaschine.

6. Verfahren gemäß einem der Ansprüche 1 bis 5, umfassend zwischen Schritt b) und d) eine Auswertung der Daten der Oberflächenanalyse des Bauteils erhalten in Schritt b) um einen Datensatz umfassend Information hinsichtlich Position, Form und Ausrichtung der sich an die Kühlfluidöffnungen (2) anschließenden Kühlfluidkanäle zu erstellen.

7. Verfahren gemäß einem der Ansprüche 1 bis 6, umfassend zwischen Schritt b) und d) eine Auswertung der Daten erhalten in Schritt b), wobei ein beschädigter Randbereich der mindestens einen Kühlfluidöffnung (2) mittels Fit-Prozessen korrigiert wird, um die ursprüngliche Form der mindestens einen Kühlfluidöffnung (2) zu erhalten.

8. Verfahren gemäß einem der Ansprüche 1 bis 7, wobei die in Schritt b) erhaltene Daten mit Konstruktionsdaten des Bauteils abgeglichen werden.

9. Verfahren gemäß einem der Ansprüche 1 bis 8, wobei ein korrigiertes Modell des Bauteils basierend auf den in Schritt b) erhaltenen Daten erzeugt wird, wobei vorhandene Konstruktionsdaten korrigiert werden.

10. Vorrichtung zur Oberflächenanalyse eines Bauteils umfassend eine Oberfläche umfassend Kühlfluidöffnungen (2) welche sich an Kühlfluidkanäle im Inneren des Bauteils anschließen, wobei die Vorrichtung mindestens zwei Messvorrichtungen und mindestens eine Befestigung für das Bauteil umfasst,
wobei die Befestigung geeignet ist direkt oder indirekt, lösbar mit dem Bauteil verbunden zu werden, wobei die Vorrichtung Mittel zur Durchführung einer zweiteiligen Oberflächenanalyse umfasst,
wobei in einem Teil der Oberflächenanalyse die Position der Kühlfluidöffnungen (2) auf der Oberfläche des Bauteils bestimmt wird und wobei in einem anderen Teil der Oberflächenanalyse die dreidimensionale Form von mindestens einer Kühlfluidöffnung (2) erfasst wird, wobei mindestens ein Element aus der Gruppe bestehend aus der mindestens zwei Messvorrichtungen und der mindestens einen Befestigung beweglich ist, wobei die Vorrichtung unterschiedliche Messvorrichtungen für die beiden Teile der Oberflächenanalyse bereitstellt, wobei die Mittel zur Durchführung der zweiteiligen Oberflächenanalyse und die unterschiedlichen Messvorrichtungen gemäß einem der Verfahren gemäß einem der Ansprüche 1 bis 9 genutzt werden die beiden Teile der zweiteiligen Oberflächenanalyse mit unterschiedlichen Messvorrichtungen durchzuführen.

11. Vorrichtung gemäß Anspruch 10, wobei die Vorrichtung eine bewegliche Messvorrichtung aufweist und
wobei die bewegliche Messvorrichtung einen Roboterarm aufweist.

12. Vorrichtung gemäß einem der Ansprüche 10 bis 11, wobei die mindestens eine Befestigung beweglich ist und
wobei die bewegliche Befestigung geeignet ist eine Rotation des Bauteils um mindestens 270° bereitzustellen.

13. Verwendung einer Vorrichtung gemäß einen der Ansprüche 10 bis 12 und/oder eines Verfahrens gemäß einem der Ansprüche 1 bis 9 bei der Herstellung oder Instandsetzung von Bauteilen einer Strömungsmaschine.

## Claims

1. Process for coating a component comprising a surface comprising cooling fluid openings which adjoin cooling fluid channels in the interior of the component, wherein the process comprises the following steps:
a) introduction of the component into an apparatus for the surface analysis of the component,
where the apparatus comprises at least two measuring devices and at least one fastening for the component,
where the fastening is suitable for being connected detachably either directly or indirectly to the component,
where the apparatus is suitable for carrying out a two-part surface analysis, where the position of the cooling fluid openings (2) on the surface of the component is determined in one part of the surface analysis and where the three-dimensional shape of at least one cooling fluid opening (2) is determined in another part of the surface analysis,
where at least one element from the group consisting of the at least two different measuring devices and the at least one fastening is movable,
b) carrying out of the surface analysis of the component, where data in respect of the position of the cooling fluid openings (2) on the surface of the component and in respect of the three-dimensional shape of at least one cooling fluid opening (2) are detected,
c) application of a coating to the component, where the cooling fluid openings (2) are at least partly, preferably completely, closed,
d) removal of the coating in the region of the cooling fluid openings by means of the data obtained in step b), where the two parts of the two-part surface analysis are carried out using the different measuring devices.

2. Process according to Claim 1, wherein the different measuring devices use different measurement methods.

3. Process according to either of Claims 1 and 2, wherein the determination of the position of the cooling fluid openings (2) on the surface of the component is carried out by means of rotation laser triangulation and/or the three-dimensional shape of at least one cooling fluid opening (2) is determined by means of an interferometer.

4. Process according to any of Claims 1 to 3, wherein the three-dimensional shape of at least 50% of the cooling fluid openings (2) is determined.

5. Process according to any of Claims 1 to 4, wherein the component is selected from the group consisting of blades (1) and heat shields of a turbo machine.

6. Process according to any of Claims 1 to 5, comprising, between step b) and d), an evaluation of the data of the surface analysis of the component obtained in step b) in order to produce a data set comprising information in respect of the position, shape and orientation of the cooling fluid channels adjoining the cooling fluid openings (2).

7. Process according to any of Claims 1 to 6, comprising, between step b) and d), an evaluation of the data obtained in step b), with a damaged peripheral region of the at least one cooling fluid opening (2) being corrected by means of fitting processes in order to obtain the original shape of the at least one cooling fluid opening (2).

8. Process according to any of Claims 1 to 7, wherein the data obtained in step b) are compared with construction data of the component.

9. Process according to any of Claims 1 to 8, wherein a corrected model of the component is produced on the basis of the data obtained in step b), with existing construction data being corrected.

10. Apparatus for the surface analysis of a component comprising a surface comprising cooling fluid openings (2) which adjoin cooling fluid channels in the interior of the component, where the apparatus comprises at least two measuring devices and at least one fastening for the component,
where the fastening is suitable for being connected detachably either directly or indirectly to the component, where the apparatus comprises means for carrying out a two-part surface analysis,
where the position of the cooling fluid openings (2) on the surface of the component is determined in one part of the surface analysis and the three-dimensional shape of at least one cooling fluid opening (2) is determined in another part of the surface analysis, where at least one element from the group consisting of the at least two measuring devices and the at least one fastening is movable,
where the apparatus provides different measuring devices for the two parts of the surface analysis, where the means for carrying out the two-part surface analysis and the different measuring devices according to a process according to one of Claims 1 to 9 are used to carry out the two parts of the two-part surface analysis using different measuring devices.

11. Apparatus according to Claim 10, wherein the apparatus has a movable measuring device and the movable measuring device has a robotic arm.

12. Apparatus according to either of Claims 10 and 11, wherein the at least one fastening is movable and the movable fastening is suitable for providing rotation of the component by at least 270°.

13. Use of an apparatus according to any of Claims 10 to 12 and/or a process according to any of Claims 1 to 9 in the production or refurbishment of components of a turbo machine.

## Revendications

1. Procédé de revêtement d'une pièce comprenant une surface comprenant des ouvertures de fluide de refroidissement qui se raccordent à des conduits de fluide de refroidissement à l'intérieur de la pièce, dans lequel le procédé comprend les stades suivants :
a) insertion de la pièce dans une installation d'analyse de surface de la pièce,
dans lequel l'installation comprend au moins deux installations de mesure et au moins une fixation de la pièce,
dans lequel la fixation est propre à être reliée à la pièce, de manière détachable directement ou indirectement,
dans lequel l'installation est propre à effectuer une analyse de surface en deux parties, dans lequel dans une première partie de l'analyse de surface, on détermine la position des ouvertures (2) de fluide de refroidissement à la surface de la pièce, et dans lequel dans une autre partie de l'analyse de surface, on détecte la forme en trois dimensions d'au moins une ouverture (2) de fluide de refroidissement,
dans lequel au moins un élément choisi dans le groupe constitué des au moins deux dispositifs de mesure différents et de la au moins une fixation est mobile,
b) on effectue l'analyse de surface de la pièce, dans lequel on détecte des données concernant la position des ouvertures (2) de fluide de refroidissement à la surface de la pièce et concernant la forme en trois dimensions d'au moins une ouverture (2) de fluide de refroidissement,
c) on dépose un revêtement sur la pièce, dans lequel on ferme les ouvertures (2) de fluide de refroidissement au moins en partie, de préférence complètement,
d) on élimine le revêtement dans la partie des ouvertures de fluide de refroidissement, au moyen des données obtenues au stade b),
dans lequel on effectue les deux parties de l'analyse de surface en deux parties par les installations de mesure différentes.

2. Procédé suivant la revendication 1, dans lequel les installations de mesure différentes utilisent les procédés de mesure différents.

3. Procédé suivant l'une des revendications 1 à 2, dans lequel la détermination de la position des ouvertures (2) de fluide de refroidissement à la surface de la pièce s'effectue au moyen d'une triangulation laser à rotation et/ou on détecte la forme en trois dimensions d'au moins une ouverture (2) de fluide de refroidissement au moyen d'un interféromètre.

4. Procédé suivant l'une des revendications 1 à 3, dans lequel on détermine la forme en trois dimensions d'au moins 50% des ouvertures (2) de fluide de refroidissement.

5. Procédé suivant l'une des revendications 1 à 4, dans lequel on choisit la pièce dans le groupe constitué d'aubes (1) et de boucliers thermiques d'une turbomachine.

6. Procédé suivant l'une des revendications 1 à 5, comprenant entre le stade b) et d) une évaluation des données de l'analyse de surface de la pièce obtenues au stade b) afin d'établir un ensemble de données comprenant de l'information concernant la position, la forme et la direction des conduits de fluide de refroidissement se raccordant aux ouvertures (2) de fluide de refroidissement.

7. Procédé suivant l'une des revendications 1 à 6, comprenant entre le stade b) et d) une évaluation des données obtenues au stade b), dans lequel on corrige une partie de bord endommagée de la au moins une ouverture (2) de fluide de refroidissement, au moyen de processus d'ajustement pour obtenir la forme d'origine de la au moins une ouverture (2) de fluide de refroidissement.

8. Procédé suivant l'une des revendications 1 à 7, dans lequel on ajuste les données obtenues au stade b) par des données de construction de la pièce.

9. Procédé suivant l'une des revendications 1 à 8, dans lequel on produit un modèle corrigé de la pièce sur la base des données obtenues au stade b), des données de construction existantes étant corrigées.

10. Installation d'analyse de surface d'une pièce comprenant une surface comprenant des ouvertures (2) de fluide de refroidissement qui se raccordent à des conduits de fluide de refroidissement à l'intérieur de la pièce,
dans laquelle l'installation comprend au moins deux installations de mesure et au moins une fixation de la pièce, dans laquelle la fixation est propre à être reliée à la pièce de manière détachable directement ou indirectement, dans laquelle l'installation comprend des moyens pour effectuer une analyse de surface en deux parties,
dans laquelle dans une partie de l'analyse de surface, on détermine la position des ouvertures (2) de fluide de refroidissement à la surface de la pièce, et dans laquelle dans une autre partie de l'analyse de surface, on détecte la forme en trois dimensions d'au moins une ouverture (2) de fluide de refroidissement,
dans laquelle au moins un élément choisi dans le groupe constitué des au moins deux dispositifs de mesure différents et de la au moins une fixation est mobile, dans laquelle l'installation dispose d'installations de mesure différentes pour les deux parties de l'analyse de surface, dans laquelle on utilise les moyens pour effectuer l'analyse de surface en deux parties et les installations de mesure différentes selon un procédé suivant l'une des revendications 1 à 9, pour effectuer les deux parties de l'analyse de surface en deux parties par des installations de mesure différentes.

11. Installation suivant la revendication 10, dans laquelle l'installation a une installation de mesure mobile et
dans laquelle l'installation de mesure mobile a un bras de robot.

12. Installation suivant l'une des revendications 10 à 11, dans laquelle la au moins une fixation est mobile et dans laquelle la fixation mobile est propre à donner une rotation de la pièce d'au moins 270°.

13. Utilisation d'une installation suivant l'une des revendications 10 à 12 et/ou d'un procédé suivant l'une des revendications 1 à 9 pour la production ou la réparation de pièces d'une turbomachine.
